# EUROPÄISCHE PATENTSCHRIFT

(11) **EP 0 490 133 B1**
(45) Veröffentlichungstag und Bekanntmachung des Hinweises auf die Patenterteilung: **31.08.1994**
(21) Anmeldenummer: 91119811.7
(22) Anmeldetag: 21.11.1991
(51) Int. Cl.: H02G 15/013, H02G 15/117, G02B 6/44

(54) **Muffe für eine Abzweig- oder Verbindungsstelle von Kabeln**
Sleeve for branch-off or junction area of cables
Manchon pour zone de dérivation ou de jonction de câbles

(30) Priorität: 08.12.1990 DE 4039242
(43) Veröffentlichungstag der Anmeldung: 17.06.1992
(73) Patentinhaber: kabelmetal electro GmbH, 30002 Hannover (DE)
(72) Erfinder: Marx, Karl-Heinz, W-3008 Garbsen 9 (DE)

(56) Entgegenhaltungen:
- DE-A- 2 263 419
- DE-A- 2 343 764
- DE-A- 3 817 795
- GB-A- 2 095 926

## Beschreibung

Die Erfindung betrifft eine Muffe für eine Abzweig- oder Verbindungsstelle von Kabeln, insbesondere von Nachrichtenkabeln mit Lichtwellenleitern, bestehend aus einer die Abzweig- oder Verbindungsstelle umgebenden Hülse, die endseitig flüssigkeitsdicht mit je einem in die Hülse eindringenden Stirnkörper verbunden ist, von denen jeder mindestens eine Durchgangsöffnung zum Hereinführen eines Kabels in die Muffe bzw. zum Herausführen des Kabels aus der Muffe aufweist. Aus GB-A-2 095 926 ist eine Muffe für eine Abzweig- oder Verbindungsstelle von Kabeln bekannt mit einer die Abzweig- oder Verbindungsstelle umgebenden Hülse, bei der die Hülse ein stabiles Rohr mit einem Längsschlitz ist. Die Hülse ist von einer wärmegeschrumpften Manschette umgeben, deren Enden auf die Kabeloberflächen geschrumpft sind. Im Eintrittsbereich der Muffe ist ein zumindest zum Teil mit Heißschmelzkleber beschichtetes Formteil vorgesehen, an dessen Oberfläche die Manschette zumindest zum Teil mit ihrer inneren Oberfläche anliegt.

Aus der DE-OS 38 17 795 ist eine Muffe gemäß dem Oberbegrift des Anspruchs 1 bekannt. Hierbei bestehen die Hülse und die Stirnkörper aus je zwei Halbschalen. Jeder Stirnkörper hat eine zentrale Bohrung, durch welche das Hauptkabel ein- bzw. austritt sowie eine im radialen Abstand dazu angeordnete Durchgangsöffnung, durch welche das abzweigende Kabel hindurchtritt. Die Halbschalen sind zum Zwecke der Abdichtung miteinander verklebt. Sowohl die zentrale Durchtrittsöffnung als auch die zweite Durchtrittsöffnung ist gegenüber dem jeweiligen Kabel durch einen Schrumpfschlauch abgedichtet. Der Ringspalt zwischen der Hülse und den in sie eindringenden Stirnkörper ist durch ein Spannelement abgedichtet. Von Vorteil bei dieser Muffe ist, daß nach dem Lösen der Spannelemente die Hülse über einen der Stirnkörper verschoben werden kann, wodurch das Innere der Muffe zugänglich wird. Neue Kabel können angeschlossen werden, indem diese durch noch nicht belegte Durchtrittsöffnungen eingeführt werden. Anschließend kann die Hülse wieder in ihre ursprüngliche Lage verschoben und die Spannelemente wieder betätigt werden.

Nachteilig bei dieser Muffe ist, daß es schwierig ist, die Nahtstellen zwischen der Halbschale dauerhaft dicht zu halten. Wegen der erheblichen Kräfte, die durch die Spannelemente für eine gute Abdichtung aufgebracht werden müssen, kann es zu einer Beschädigung der Abdichtung an den Nähten kommen. Wasser kann dann eindringen und die Muffe sowie u.U. das Kabel unbrauchbar machen.

Der vorliegenden Erfindung liegt von daher die Aufgabe zugrunde, die bekannte Muffe dahingehend zu verbessern, daß unter Beibehaltung der vorteilhaften Eigenschaften eine sichere Abdichtung gegen das Eindringen von Feuchtigkeit erreicht wird. Darüberhinaus soll die Herstellung der Muffe, d.h. die Anordnung der Kabel vereinfacht werden, insbesondere soll die nachträgliche Anordnung von Abzweigkabeln verbessert werden. Die Muffe soll sowohl bei geschnittenen als auch bei ungeschnittenen Kabeln gleichermaßen einsetzbar sein.

Diese Aufgabe wird durch die Kombination folgender Merkmale gelöst:
a) die Hülse ist ein stabiles Kunststoffrohr mit einem Längsschlitz
b) die Stirnkörper weisen jeder eine flanschartige Erweiterung an ihrer Umfangsfläche auf, an der sich die Hülse abstützt
c) die Durchgangsöffnungen sind als radiale Schlitze ausgebildet, in welche die Kabel eingelegt bzw. einlegbar sind
d) die Hülse und die Stirnkörper sind von einer wärmegeschrumpften Manschette umgeben, deren Längskanten durch eine flexible Schiene verbunden sind und deren Enden auf die Kabeloberflächen geschrumpft sind
e) im Eintrittsbereich der Muffe ist ein zumindest zum Teil mit Heißschmelzkleber beschichtetes Formteil vorgesehen, an dessen Oberfläche die Manschette zumindest zum Teil mit ihrer inneren Oberfläche anliegt.

Die Muffe gemäß der Lehre der Erfindung ist durch die Hülse und die Stirnkörper sehr stabil und leicht zusammenzubauen. Die aus relativ starrem Kunststoff, wie z.B. Polyethylen, bestehende Hülse hat ein gutes Rückfederungsvermögen und bildet sich ohne weiteres zu einem Rohr mit einem engen Schlitz zurück. Durch die wärmegeschrumpfte Manschette ist eine absolut sichere Abdichtung gegen eindringende Feuchtigkeit gegeben. Die Muffe ist leicht wiederöffenbar und kann dementsprechend zum nachträglichen Setzen eines weiteren Abzweiges benutzt werden. Die Verklebung und die Abdichtung des Eintrittsbereichs geschieht durch einen Heißschmelzkleber, der sich an der inneren Oberfläche der Manschette und der Oberfläche des Formteils befindet und bei Schrumpftemperatur flüssig wird und verläuft. Zwischen den Kabeln wird die Manschette durch ein Werkzeug, z.B. eine Zange, eine Klemme etc. während des Schrumpferwärmens zusammengehalten. Nach dem Erkalten ist der Heißschmelzkleber erstarrt und hält den Bereich zwischen den Kabeln zusammen.

Das Formteil ist mit besonderem Vorteil so ausgestaltet, daß in die nach außen weisende Stirnfläche des Formteils eine Vielzahl von Sacklöchern eingebracht ist, in welche zumindest ein die Manschette zwischen sich und der Formteiloberfläche festlegendes Teil wie eine Klemme, Feder, Stift etc. eingesteckt ist. Die Klemmen, Federn oder Stifte dienen im wesentlichen dazu, die Manschette mit dem größten Teil der Oberfläche der Kabel in Berührung zu bringen.

Das Formteil kann nahezu beliebig ausgestaltet sein. Es hat sich jedoch als vorteilhaft erwiesen, daß das Formteil als zylindrisches Teil ausgebildet ist und die aus- oder eintretenden Kabel auf der Umfangsfläche des Formteils aufliegen. Das Formteil kann dabei massiv oder als Becher vorliegen. Alternativ dazu besteht die Möglichkeit, das Formteil als abgeflachtes Profil, beispielsweise als Platte, auszugestalten, auf welcher die Kabel ggfs. auch an gegenüberliegenden Seiten des Profils festgelegt sind. Das Formteil hat im wesentlichen die Aufgabe, den relativ großen Durchmessersprung zwischen der Hülse und z.B. einem Lichtwellenleiterkabel zu überbrücken, und eine Abdichtung durch die wärmeschrumpfende Manschette möglich zu machen.

Das Formteil kann aus Kunststoff oder einem anderen Werkstoff bestehen. Es hat sich jedoch als vorteilhaft erwiesen, das Formteil aus Metall, z.B. Aluminium oder einer Aluminiumlegierung oder aus metallbeschichtetem Kunststoff herzustellen. Auf diese Weise wird die beim Schrumpferwärmen aufgebrachte Wärme in das Innere der durch die Manschette gebildeten Umhüllung transportiert, wodurch eine besonders sichere und einfache Abdichtung erzielt wird. Wenn das Formteil und der Stirnkörper einstückig ausgebildet sind, erhält man eine stabile Ausbildung der Endbereiche der Manschette. An den Stirnkörpern, und zwar an deren nach innen weisender Oberfläche, befinden sich Zapfen, an welche die Kabel angeschellt sind.

Es können jedoch Öffnungen an dem Formteil vorgesehen sein, durch welche ein Spannband hindurchgeführt und welches um die Kabel herumgelegt ist.

Die Stirnkörper sind in besonders zweckmäßiger Weise mittels mindestens einer Schiene in Abstand zueinander gehalten und miteinander verbunden. Dies ist von Vorteil, da dadurch der Abstand der Stirnkörper zueinander festgelegt ist, wodurch das Herumlegen der Hülse zu einem exakten Anliegen der Enden der Hülse an die Flansche der Stirnkörper führt. Diese Schiene dient ebenfalls dazu, Kassetten für die Lichtwellenleiterspleiße zu befestigen.

Damit zum Wiederöffnen der Muffe Hülse und Stirnkörper voneinander getrennt werden können, sind sowohl der Längsschlitz der Hülse als auch die umfangsseitig verlaufende Spalte zwischen der Hülse und dem Stirnkörper überdeckt, z.B. mit einem Klebestreifen, der ein Eindringen von Heißschmelzkleber in die Spalte verhindern soll.

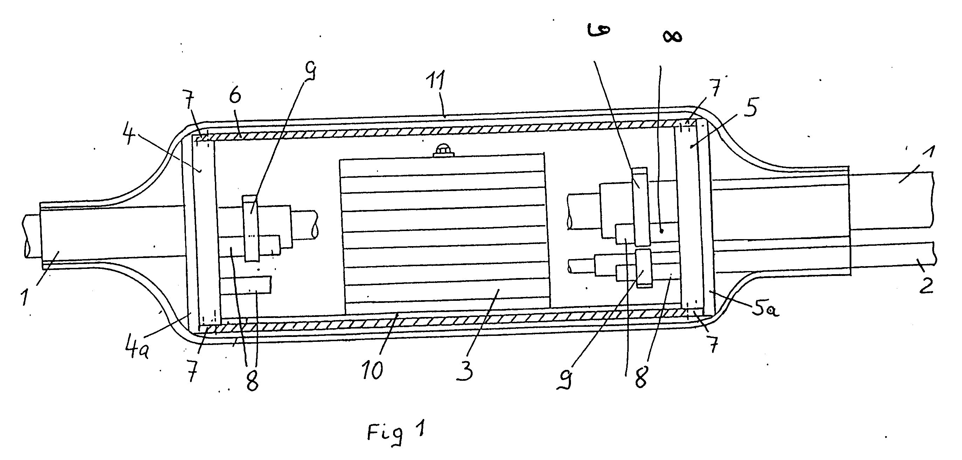

Die Erfindung ist anhand der in den Figuren 1 bis 7 schematisch dargestelltenn Ausführungsbeispiele erläutert.

In der Figur 1 ist eine seitliche Ansicht der teilweise aufgeschnittenen Muffe dargestellt.

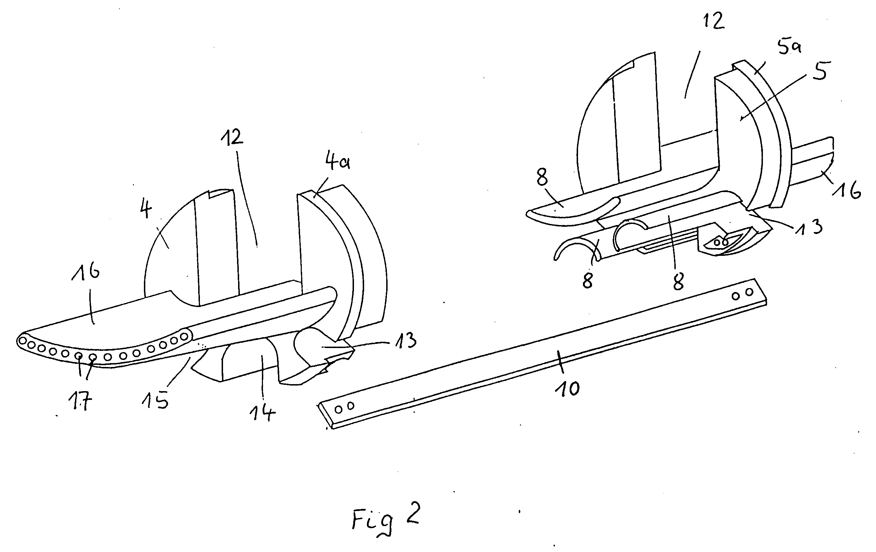

Das in die Muffe eintretende Kabel ist mit 1 bezeichnet, von welchem ein Abzweigkabel 2 abzweigt. Sowohl bei dem Kabel 1 als auch bei dem Abzweigkabel 2 soll es sich in dem Ausführungsbeispiel um Lichtwellerleiterkabel handeln, obwohl die Erfindung auch für elektrische Kabel anwendbar ist. Die Verbindungen der nicht näher dargestellten optischen Fasern der Kabel 1 und 2 befinden sich in einer sogenannten Spleißkassette 3, die innerhalb der Muffe angeordnet ist. Die Muffe besteht aus zwei Stirnkörpern 4 und 5, auf deren Umfangsfläche ein längsgeschlitztes Kunststoffrohr 6 aufliegt. Aus der Umfangsfläche der Stirnkörper 4 und 5 springt ein Flansch 4a bzw. 5a vor, an welchen sich das geschlitzte Kunststoffrohr 6 mit seinen Enden abstützt. Die Stirnkörper 4 und 5 weisen wie anhand der Figur 2 näher beschrieben, radiale Schlitze zum Einlegen der Kabel 1 und 2 auf. Im Bereiche des Schlitzendes sind Zapfen 8 vorgesehen, die mit den Stützkörpern 4 und 5 mechanisch fest verbunden, vorteilhaft ein Teil von diesen sind, an welche die Kabel 1 und 2 zwecks Zugentlastung der Verbindungsstelle mit Schellen 9 befestigt sind. Die Stirnkörper 4 und 5 sind mit einer Schiene 10 verbunden, welche in die Umfangsfläche eingelassen und wie bei 7 dargestellt dort verschraubt ist. Die Schiene 10 legt den Abstand zwischen den Stirnkörpern 4 und 5 fest und gewährleistet, daß das geschlitzte Kunststoffrohr 6 an den Flanschen 4a und 5a anliegt. Der äußere Abschluß der Muffe wird durch eine wärmegeschrumpfte Manschette 11 gebildet, die aus einem Band aus vernetztem Kunststoff besteht, dessen Längskanten durch eine nicht dargestellte flexible Schiene zusammengehalten sind. Die Länge der Manschette 11 ist so bemessen, daß sie das Kunststoffrohr 6, und die Stirnkörper 4 und 5 überdeckt und auf die ein- und austretenden Kabel 1 und 2 aufgeschrumpft ist. Der Längsschlitz des Kunststoffrohres 6 sowie die umfangsseitigen Spalten zwischen dem Kunststoffrohr 6 und den Stirnkörpern 4 und 5 sind in nicht dargestellter Weise mit einem Klebeband überdeckt.

Eine besonders vorteilhafte Art der Abdichtung bei zwei oder mehr aus einer Manschette auftretenden Kabeln 1 und 2 ist in der älteren Patentanmeldung P 40 29 516.8 beschrieben, auf welche in der Beschreibung der Figuren 2 bis 7 Bezug genommen wird.

Die Figur 2 zeigt die zwei Stirnkörper 4 und 5 vor ihrem Zusammenbau. Die Stirnkörper 4 und 5 weisen mehrere radiale Schlitze 12 bis 15 auf, in welche die Kabel 1 und 2 oder weitere Kabel eingelegt werden. Aus der nach außen weisenden Oberfläche der Stirnkörper 4 und 5 ragt ein Formteil 16 heraus, welches zweckmäßigerweise Teil des Stirnkörpers 4 bzw. 5 ist. In die Stirnfläche des Formteils 16 sind Sackbohrungen 17 eingebracht. Diese Sackbohrungen 17 dienen, wie später beschrieben, der Abdichtung des Muffenendes.

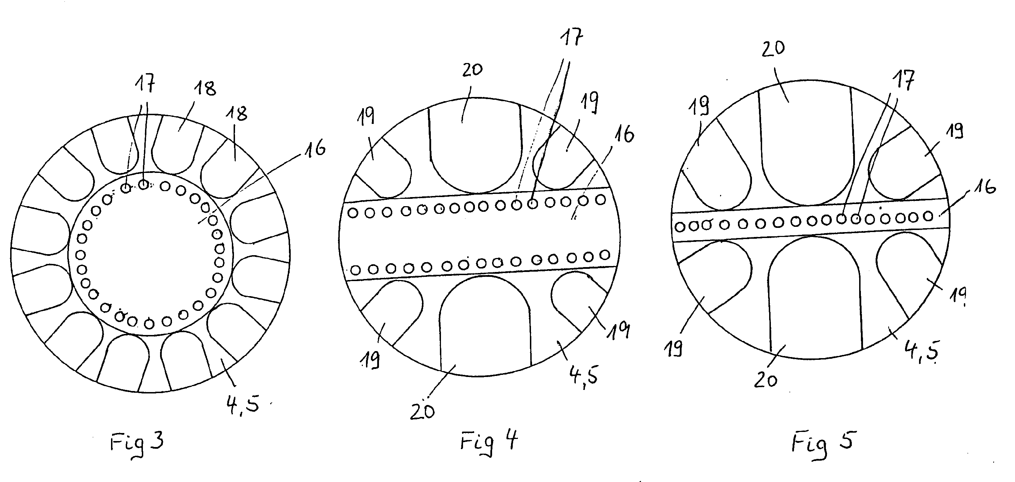

Die Figuren 3 bis 5 zeigen Ansichten verschiedener Stirnkörper 4 bzw. 5. Der Stirnkörper 4 bzw. 5 nach Figur 3 weist eine Vielzahl von Radialschlitzen 18 zur Aufnahme einer Vielzahl von relativ dünnen Abzweigkabeln auf. Das Formteil 16 ist zylinderförmig ausgebildet. An seiner äußeren Peripherie befindet sich eine Reihe von Sackbohrungen.

Nach den Figuren 4 und 5 weisen die Stirnkörper 4 bzw. 5 zwei große Radialschlitze 20 sowie vier kleine Radialschlitze 19 auf. Das Formteil 16 ist quaderförmig und zeigt an seiner Stirnfläche die Sackbohrungen.

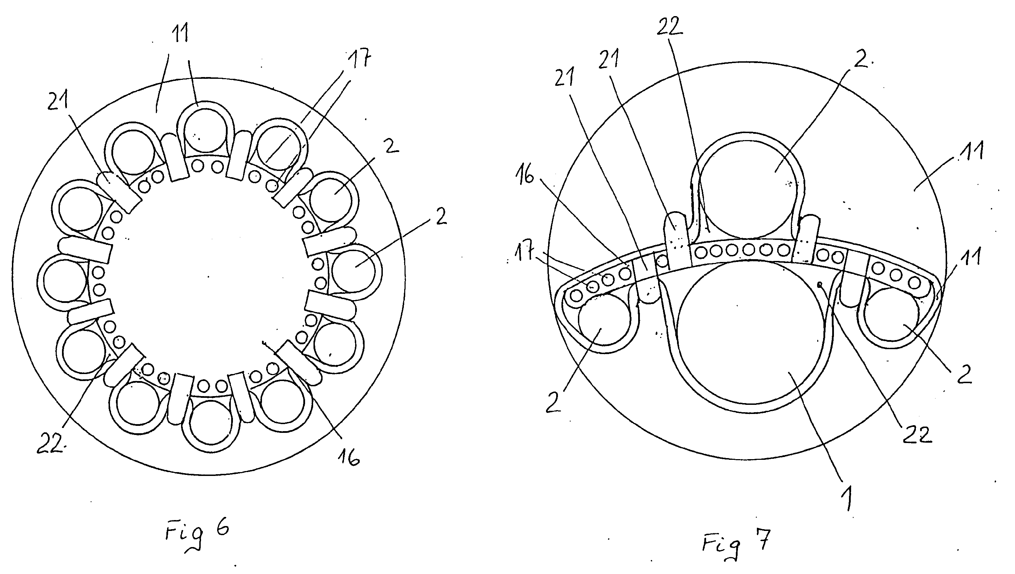

Die Figuren 6 und 7 zeigen Ansichten des abgedichteten Endbereiches der Muffe.

Aus der Muffe nach Figur 6 treten eine Vielzahl von relativ dünnen Abzweigkabeln 2 aus. Der Stirnkörper 4 ist dem in Figur 3 dargestellten ähnlich und weist eine zylindrische Form auf. Die Manschette 11 ist mittels der Steckelemente 21 vor dem Schrumpfen um die Abzweigkabel 2 herumgeformt. Wie in der älteren Patentanmeldung P 40 29 515.8 werden die Steckelemente 21 in die Sackbohrungen 17 eingeführt. Ein Arm des Steckelementes 21 liegt an der äußeren Oberfläche der Manschette 11. Die zwischen der Manschette 11 und den Abzweigkabeln 2 befindlichen Zwickel 22 werden beim Schrumpfvorgang durch den an der Oberfläche der Manschette 11 vorgesehenen Heißschmelzkleber ausgefüllt und abgedichtet.

Die Figur 7 zeigt eine weitere Ausgestaltung der Erfindung. Die von dem Kabel 1 abgezweigten Abzweigkabel 2 liegen wie das Kabel 1 auf dem Formteil 16, welches leicht gekrümmt ist und im wesentlichen die Form eines Quaders zeigt. Auf der dem Kabel 1 gegenüberliegenden Seite ist noch ein Abzweigkabel 2 angeordnet.

Der wesentliche Vorteil, der durch die Erfindung erzielt wird, ist darin zu sehen, daß durch das Formteil die Manschette den Endbereich vollkommen abdichten kann, was wegen des großen Durchmesserunterschiedes zwischen dem Kabel und der Hülse an sich unmöglich wäre, da Reckgrade von mehr als 400 % kaum möglich sind. Andererseits kann jedoch der Durchmesser der Hülse bei Lichtwellenleiterkabeln wegen des vorzusehenden Faservorrates und dessen Windungsdurchmesser bis zu 100 mm betragen, während der Kabeldurchmesser in der Größenordnung von 10 mm liegt.

## Patentansprüche

1. Muffe für eine Abzweig- oder Verbindungsstelle von Kabeln, insbesondere von Nachrichtenkabeln mit Lichtwellenleitern, bestehend aus einer die Abzweig- oder Verbindungsstelle umgebenden Hülse (6), die endseitig flüssigkeitsdicht mit je einem in die Hülse eindringenden Stirnkörper (4, 5) verbunden ist, von denen jeder mindestens eine Durchgangsöffnung (12, 13, 14, 15, 18, 19, 20) zum Hereinführen eines Kabels (1, 2) in die Muffe bzw. zum Herausführen des Kabels (1, 2) aus der Muffe aufweist, gekennzeichnet durch folgende Merkmale
a) die Hülse (6) ist ein stabiles Kunststoffrohr mit einem Längsschlitz
b) die Stirnkörper (4, 5) weisen jeder eine flanschartige Erweiterung (4a, 5a) an ihrer Umfangsfläche auf, an der sich die Hülse (6) abstützt
c) die Durchgangsöffnungen sind als radiale Schlitze ausgebildet, in welche die Kabel eingelegt bzw. einlegbar sind
d) die Hülse und die Stirnkörper (4, 5) sind von einer wärmegeschrumpften Manschette (11) umgeben, deren Längskanten durch eine flexible Schiene verbunden sind und deren Enden auf die Kabeloberflächen geschrumpft sind
e) im Eintrittsbereich der Muffe ist ein zumindest zum Teil mit Heißschmelzkleber beschichtetes Formteil (16) vorgesehen, an dessen Oberfläche die Manschette (11) zumindest zum Teil mit ihrer inneren Oberfläche anliegt.

2. Muffe nach Anspruch 1, dadurch gekennzeichnet, daß in die nach außen weisende Stirnfläche des Formteils (16) eine Vielzahl von Sacklöchern (17) eingebracht ist, in welche zumindest ein die Manschette (11) zwischen sich und der Formteiloberfläche festlegendes Teil (21), wie eine Klemme, Feder, Stift etc. eingesteckt ist.

3. Muffe nach Anspruch 1 oder 2, dadurch gekennzeichnet, daß das Formteil (16) als zylindrisches Teil ausgebildet ist und die aus- oder eintretenden Kabel auf der Umfangsfläche des Formteils aufliegen.

4. Muffe nach Anspruch 1 oder 2, dadurch gekennzeichnet, daß das Formteil (16) ein abgeflachtes Profil ist, beispielsweise eine Platte, auf welcher die Kabel ggfs. auch an gegenüberliegenden Seiten des Profils festgelegt sind.

5. Muffe nach einem der Ansprüche 1 bis 4, dadurch gekennzeichnet, daß das Formteil (16) aus Metall besteht.

6. Muffe nach einem der Ansprüche 1 bis 4, dadurch gekennzeichnet, daß das Formteil und der Stirnkörper (4, 5) einstückig ausgebildet sind.

7. Muffe nach einem der Ansprüche 1 bis 6, dadurch gekennzeichnet, daß die Stirnkörper (4, 5) durch mindestens eine an diesen befestigte Schiene (10) in Abstand zueinander gehalten und miteinander verbunden sind.

## Claims

1. Closure for a branching point or junction point of cables, in particular of communication cables having optical waveguides, consisting of a sleeve (6) which surrounds the branching point or junction point and is connected at its end in a liquid-tight manner to in each case one end body (4, 5) penetrating into the sleeve, each one of which end bodies exhibits at least one passage opening (12, 13, 14, 15, 18, 19, 20) for passing a cable (1, 2) into the closure or for passing the cable (1, 2) out of the closure, characterized by the following features:
a) the sleeve (6) is a solid plastic tube having a longitudinal slot
b) the end bodies (4, 5) each exhibit a flange-like widening (4a, 5a) on their circumferential surface, on which widening the sleeve (6) is supported
c) the passage openings are designed as radial slots, into which the cables are inserted or can be inserted
d) the sleeve and the end bodies (4, 5) are surrounded by a heat-shrunk collar (11) whose longitudinal edges are connected by means of a flexible rail and whose ends are shrunk on to the cable surface
e) in the entrance region of the closure there is provided a moulding (16) which is at least partly coated with hot-melt adhesive and against whose surface the collar (11) at least partly bears with its inner surface.

2. Closure according to Claim 1, characterized in that a multiplicity of blind holes (17) are introduced into the end surface facing outwards of the moulding (16), into which holes at least one part (21), defining the collar (11) between itself and the surface of the moulding, such as a clamp, spring, pin etc., is plugged.

3. Closure according to Claim 1 or 2, characterized in that the moulding (16) is designed as a cylindrical part and the cables entering or leaving rest on the circumferential surface of the moulding.

4. Closure according to Claim 1 or 2, characterized in that the moulding (16) is a flattened profile, for example a plate, on which the cables are fixed, possibly also on opposing sides.

5. Closure according to one of Claims 1 to 4, characterized in that the moulding (16) is made of metal.

6. Closure according to one of Claims 1 to 4, characterized in that the moulding and the end body (4, 5) are of integral design.

7. Closure according to one of Claims 1 to 6, characterized in that the end bodies (4, 5) are held at a distance from each other and connected to each other by means of at least one rail (10) fixed thereto.

## Revendications

1. Manchon pour un emplacement de dérivation ou de connexion de câbles, en particulier de câbles de télécommunication avec guides d'ondes lumineuses, constitué d'une douille (6) qui entoure l'emplacement de dérivation ou de connexion et qui, à chacune de ses extrémités, est reliée, avec étanchéité au liquide, avec un élément frontal (4, 5) qui pénètre dans la douille et dont chacun présente au moins une ouverture de passage (12, 13, 14, 15, 18, 19, 20) pour faire passer un câble (1, 2) dans le manchon ou faire passer le câble (1, 2) hors du manchon, manchon caractérisé par les mentions suivantes
a) la douille (6) est un tube plastique rigide présentant une fente longitudinale;
b) les éléments frontaux (4, 5) présentent chacun, sur leur surface périphérique, une extension en forme de collet (4a, 5a) sur laquelle s'appuie la douille (6);
c) les ouvertures de passage sont conçues sous forme de fentes radiales dans lesquelles les câbles sont posés ou peuvent être posés;
d) la douille et les éléments frontaux (4, 5) sont entourés d'une manchette (11), rétractée à chaud, dont les bords longitudinaux sont réunis par une baguette flexible et dont les extrémités sont rétractées sur les surfaces des câbles;
e) dans la zone d'entrée du manchon est prévue une pièce de forme (16) qui est au moins en partie revêtue d'une colle fondant à chaud et sur la surface de laquelle la manchette (11) s'appuie au moins partiellement par sa surface intérieure.

2. Manchon selon la revendication 1, caractérisé par le fait que dans la surface frontale, orientée vers l'extérieur, de la pièce de forme (16) sont prévus une pluralité de trous borgnes (17) dans lesquels est enfichée au moins une pièce (21), comme une pince, un ressort, une goupille, etc., qui fixe la manchette (11) entre elle et la surface de la pièce de forme.

3. Manchon selon la revendication 1 ou 2, caractérisée par le fait que la pièce de forme (16) est conçue sous forme de pièce cylindrique et que les câbles sortant ou entrant s'appuient sur une surface périphérique de la pièce de forme.

4. Manchon selon la revendication 1 ou 2, caractérisé par le fait que la pièce de forme (16) est un profilé plat, par exemple une plaque, sur lequel sont fixés les cales, éventuellement aussi sur les faces opposées du profilé.

5. Manchon selon l'une des revendications 1 à 4, caractérisé par le fait que la pièce de forme (16) est en métal.

6. Manchon selon l'une des revendications 1 à 4, caractérisé par le fait que la pièce de forme et l'élément frontal (4, 5) sont d'une seule pièce.

7. Manchon selon l'une des revendications 1 à 6, caractérisé par le fait que les éléments frontaux (4, 5) sont maintenus à distance l'un de l'autre et reliés l'un à l'autre au moyen d'au moins une baguette (10) fixée sur eux.
